# EUROPEAN PATENT SPECIFICATION

(11) **EP 0 805 931 B1**
(45) Date of publication and mention of the grant of the patent: **23.05.2001**
(21) Application number: 96900979.4
(22) Date of filing: 19.01.1996
(51) Int. Cl.: F16L 39/00

(54) **COOLABLE JOINT FOR INTERCONNECTING PIPE SECTIONS**
KÜHLBARE VERBINDUNG ZUM VERBINDEN VON ROHRTEILSTÜCKEN
JOINT REFROIDISSABLE RELIANT DES SECTIONS DE CONDUITES

(30) Priority: 25.01.1995 EP 95200177; 12.07.1995 EP 95304861
(43) Date of publication of application: 12.11.1997
(73) Proprietor: SHELL INTERNATIONALE RESEARCH MAATSCHAPPIJ B.V., 2596 HR Den Haag (NL)
(72) Inventor: GUITON, Jeremy, David, Lehardy, London W2 7NA (GB)
(74) Representative: Zeestraten, Albertus Wilhelmus Joannes
(86) International application number: EP9600324
(87) International publication number: WO9623159

(56) References cited:
- EP-A- 0 281 689
- DE-A- 2 249 449
- DE-A- 2 537 924
- FR-A- 2 362 330
- NL-A- 8 200 164
- NL-A- 8 205 037
- US-A- 4 149 739

## Description

The invention relates to a coolable joint for interconnecting pipe sections.

More particularly the invention relates to a coolable joint for connecting a pipe section to a coolable pipe section which has co-axial fibre reinforced inner and outer walls and a cooling fluid channel formed between said walls.

An arrangement of coolable double-walled plastic pipe sections according to the preamble of claim 1 is disclosed in European Patent Specification No. 0281689.

Such coolable plastic pipe sections are light-weight, fire resistant and are substantially maintenance free and are therefore suitable for use in pipeline systems on decks of ships and on offshore structures.

The cooling fluid channels of adjacent pipe sections known from said prior art reference are interconnected via U-shaped connection tubes of which one leg is screwed to the outer wall of one pipe section and has an inlet opening that passes through the outer wall of said one pipe section into a fluid channel formed between the inner and outer walls of that pipe section and the other leg is screwed to the outer wall of the other pipe section and has an outlet opening that passes through the outer wall of said other pipe section into a fluid channel formed between the inner and outer walls of said other pipe section.

Disadvantages of the application of the known U-shaped connection tubes are that they require labour intensive installation procedures and that, once installed, the tubes can be easily damaged.

Furthermore, the known U-shaped connection tubes hamper the interconnected pipe sections to slide relative to each other as a result of thermal expansion or contraction which may initiate significant thermal stresses when the pipe sections are surrounded by a fire. In the event of a fire any cooling fluid flowing through the U-shaped connection tubes will furthermore warm up significantly and the U-shaped connection tubes do not provide a uniform flow path for cooling fluid which evenly cools those external surfaces of the joint and coolable pipe which are exposed to the fire.

An object of the present invention is to remedy these disadvantages.

The arrangement according to the invention thereto is characterized by the characterizing features of claim 1.

In a first embodiment of the joint according to the invention the joint is designed to interconnect a pair of said coolable pipe sections and the cooling channel formed between the walls of the joint has an annular shape and is at least partly filled with a structural but permeable core, which core forms part of said cooling fluid distribution means.

In said first embodiment of the joint according to the invention the tubular section may be formed by a sleeve having a cylindrical inner surface which fits co-axially around the ends of the pipe sections that are to be interconnected by the joint which sleeve is provided at each end with a solid end ring to which the inner and outer walls of the sleeve are connected, the inlet section is provided by a series of circumferentially distributed inlet openings in the inner wall of the sleeve adjacent to one end ring and the outlet section is provided by a series of circumferentially distributed outlet openings in the inner wall of the sleeve adjacent to the other end ring.

Alternatively, in said first embodiment of the joint according to the invention the tubular section consists of a male and a female part, each part being connected to one of the pipe sections to be interconnected such that the part forms an end piece of the pipe section, the male part having an inner wall comprising a cylindrical end section which protrudes beyond the outer wall of said part and which has an outer diameter that is substantially equal to the inner diameter of at least the end section of the inner wall of the female part; and the female part having an outer wall comprising a cylindrical end section which protrudes beyond the inner wall of said part and which has an inner diameter that is substantially equal to the outer diameter of at least the end section of the outer wall of the male part.

A pipe section adapted to be coupled to other pipe sections by a joint comprising a male and female part as described hereinbefore may comprise at one end thereof said female part and at another end said male part.

Sometimes it is desirable to connect a double-walled plastic pipe to a conventional steel pipe. Thus, there is a need for a transition joint that is suitable for making such a connection.

Such a transition joint should provide a thermal barrier which protects the plastic pipe from overheating in the event the metallic pipe is engulfed in a fire and heat is transmitted via the wall of the metallic pipe and the transition joint and optionally via the interior thereof to the walls of the plastic pipe.

Moreover, such a joint should be cooled and provide an entrance or discharge for cooling fluid that may be pumped through the annular cooling fluid channel provided between the walls of the plastic pipe.

In a second embodiment of the joint according to the invention the joint forms a transition joint for interconnecting a metallic and a coolable double-walled plastic pipe.

The transition joint according to the invention comprises a first tubular section which is securable in fluid communication with the metallic pipe and which is secured by a ring-shaped transition section in fluid communication with a second tubular section. The second tubular section is fittable co-axially around or within the double-walled plastic pipe and is formed by a double-walled sleeve. The sleeve has an annular cooling fluid channel formed between the walls. In the inner or outer tubular wall of the sleeve which faces in use a wall of the plastic pipe one or more perforations are present that are connectable in fluid communication with one or more perforations in the adjacent wall of the plastic pipe in order to create in use a fluid communication between the annular cooling fluid channel formed between the walls of the sleeve and an annular cooling fluid channel formed between the walls of the plastic pipe. The sleeve is further provided with a cooling fluid passage for feeding or discharging cooling fluid into or from the annular fluid channels.

Preferably, the second tubular section has a larger width than the first tubular section and the ring-shaped transition section is formed by a double-walled frusto-conical pipe-section of which the inner and outer wall are each at one end thereof secured to the outer circumference of the first tubular section and at the other end thereof to the inner and outer walls, respectively, of the sleeve.

It is furthermore preferred that the transition joint is predominantly made of metal.

It is also preferred that the second tubular section is fittable around a coolable double-walled plastic pipe and that said perforations are arranged in the inner wall of the sleeve. In such case the inner wall of the sleeve is equipped at its inner circumference with one or more sealing rings at each side of said perforation or perforations.

It is observed that Netherlands patent specification 8205037 discloses a stab-in joint for interconnecting dual passageway plastic pipes such that fluid channels passing through the pipe wall are interconnected via an annular chamber. This chamber is provided with a bleeding valve which may be used to take samples of the fluid from the channels. Although the chamber is connected to the channels any fluid which enters the chamber is essentially stagnant, unless the bleeding valve is opened. Hence the known chamber is not designed to be used for cooling purposes.

Other joints for dual passageway pipes are disclosed in German patent specifications 2537924 and 2249449, US patent specification No. 4149739 and in French patent specification 2362330. The joints known from these prior art references are not designed for interconnecting coolable plastic pipes and the known joints contain screw connections or flanges that are bolted together to secure the interconnected pipe sections to each other which may lead to significant thermal stresses when the pipe sections expand or compact as a result of temperature variations.

The invention will now be described in more detail and by way of example with reference to the accompanying drawings, in which
Figure 1 shows a longitudinal sectional view of an upper half of the first embodiment of a joint according to the invention;
Figure 2 shows a longitudinal sectional view of an upper half of an alternative configuration of the first embodiment of a joint according to the invention;
Figure 3 is a cross-axial section of the joint of Figure 2 along line III-III when seen in the direction of the arrows; and
Figure 4 shows a longitudinal sectional view of the second embodiment of the joint according to the invention in which the joint is used as a transition joint for interconnecting a coolable plastic pipe and a metallic pipe.

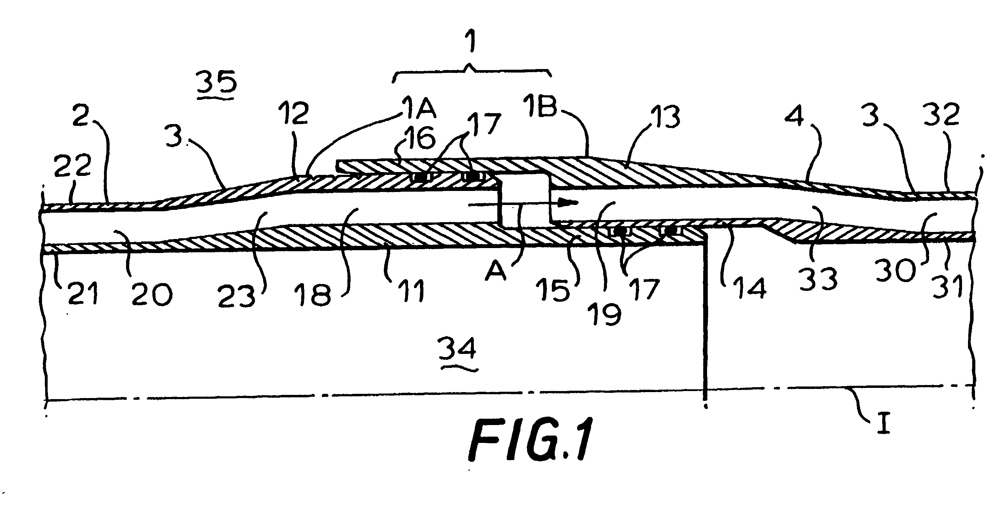

Referring now to Figure 1 there is shown the upper half of a joint 1 which consists of a male part 1A and a female part 1B.

The male part 1A has co-axial fibre reinforced plastic inner and outer walls 11 and 12, respectively, which are connected to the co-axial fibre reinforced plastic inner and outer walls 21 and 22, respectively, of a first pipe section 2 via a tapered transition section 3 such that the male part 1A forms an integral end piece of the first pipe section 2.

The female part 1B has co-axial fibre reinforced plastic inner and outer walls 13 and 14, respectively, which are connected to the co-axial fibre reinforced inner and outer walls 31 and 32, respectively, of a second pipe section via a tapered transition section 4 such that the female part 1B forms an integral end piece of the second pipe section 3.

The inner wall 11 of the male part 1A comprises a cylindrical end section 15 which protrudes beyond the outer wall 12 of said part 1A whereas the outer wall 13 of the female part 1B comprises a cylindrical end section 16 which protrudes beyond the inner wall 14 of the female part.

The cylindrical end section 15 of the male part 1A has an outer diameter which is slightly smaller than the inner diameter of the end of the inner wall 14 of the female part 1B and O-ring seals 17 are located in grooves at the outer circumference of said outer wall 14 to provide a fluid tight seal between said end section 15 and wall 14.

The cylindrical end section 16 of the female part 1B has an inner diameter which is slightly larger than the outer diameter of the outer wall 12 of the male part 1A and O-ring seals 17 are located in grooves at the outer circumference of said outer wall 12 to provide a fluid tight seal between said end section 16 and wall 12.

Between the inner and outer walls 11 and 16, respectively, of the male part 1A an annular cooling fluid channel 18 is formed which is connected in fluid communication with an annular cooling fluid channel 20 between the inner and outer walls 21 and 22, respectively, of the first pipe section 2 via an annular inlet opening 23 which is formed between the co-axial walls of the tapered transition section 3.

Between the inner and outer walls 14 and 13, respectively, of the female part 1B an annular cooling fluid channel 19 is formed which is connected in fluid communication with an annular cooling fluid channel 30 between the inner and outer walls 31 and 32, respectively, of the second pipe section 3 via an annular inlet opening 33 which is formed between the co-axial walls of the tapered transition section 33.

The male part 1A and female part 1B of the joint 1 are mated by sliding the parts towards each other in longitudinal direction relative to the central axis I. After mating of the parts 1A and 1B the fluid channels 18 and 19 of these parts are interconnected and a continuous annular flow path is formed by the channels 20, 18, 19 and 30 through which cooling fluid can be pumped in the direction of arrow A or vice versa. In the mated position the O-ring seals 17 provide fluid tight seals between the cooling fluid channels 20, 18, 19 and 30 and both the pipe interior 34 and pipe exterior 35.

Optionally, the sealing rings 17 are cooled in case of a fire by inducing fluid to flow through the annular space (not shown) between the sealing rings 17 and the outer walls 12 and 16. This may be accomplished by arranging a polyvinylchloride (PVC) plug (not shown) in a hole through the outer wall 16 of the female part 1A near the bottom of the area between the sealing rings 17 and by drilling one or more holes (not shown) through the outer wall 12 of the male part 1A near the top of the area between the sealing rings 17.

In case of a fire the PVC plug will melt away and some cooling fluid will then enter into the annular space between the sealing rings 17 via the openings in the male part 1A and will flush away from said annular space to the pipe enterior via the opening in which the PVC plug was present.

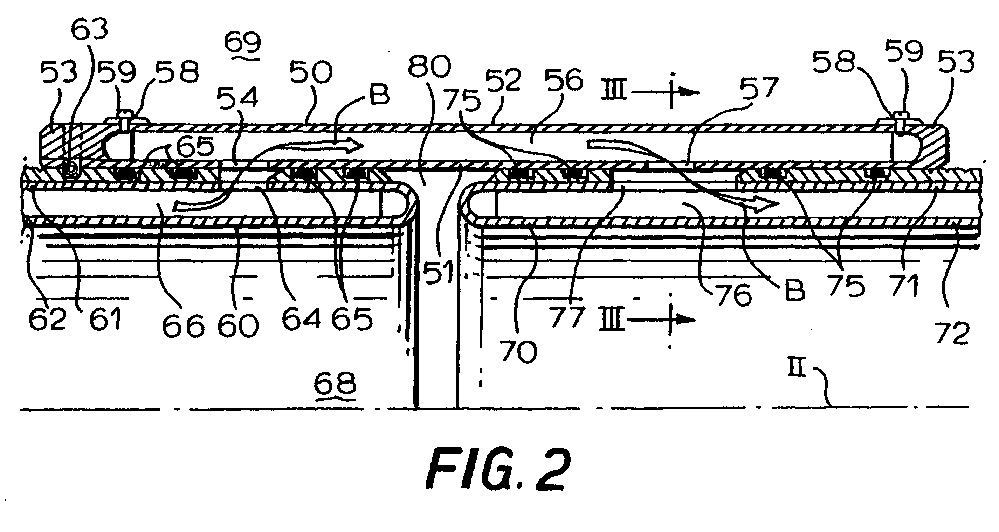

Referring now to Figure 2 there is shown a joint which comprises a sleeve 50 having co-axial fibre reinforced plastic inner and outer walls 51 and 52, respectively.

The sleeve 50 surrounds the ends of the pipe sections 60 and 70 that are to be interconnected by the joint.

The sleeve 50 is at each end provided with a solid fibre reinforced plastic end ring 53 to which the inner and outer walls 51 and 52 are connected. One of the end rings 53 is secured to the outer wall 61 of the pipe section 60 by a locking ring 63. This ring 63 fits within a groove formed in said wall 61 and serves to lock the sleeve 50 in a predetermined axial position relative to the end of the pipe section 60 such that a series of circumferentially spaced inlet openings 54 in the inner wall 54 of the sleeve 50 surround a series of circumferentially spaced openings 64 in the outer wall 61 of the pipe section 60. Two sets of O-ring seals 65 are provided at each side of the series of openings 54, 64 to provide fluid tight seals between the pipe interior 68, the pipe exterior 69 and the cooling fluid channel formed by the openings 54, 64 and the annular spaces 56 and 66 between the co-axial walls 51 and 52 of the sleeve 50 and between the co-axial walls 61 and 62 of the pipe section 60.

Near the end ring 53 at the right side of Figure 2 a series of circumferentially spaced outlet openings 57 are formed in the inner wall 51 of the sleeve 50. These outlet openings 57 surround one or more openings 77 in the outer wall 71 of the pipe section 70. Two sets of O-ring seals 75 are provided at each side of the series of openings 57, 77 to provide fluid tight seals between the pipe interior 68, the pipe exterior 69 and the cooling fluid channel formed by the openings 57, 77 and the annular spaces 56 and 76 between the co-axial walls 51 and 52 of the sleeve 50 and between the co-axial walls 71 and 72 of the pipe section 70.

The assembly of annular spaces 56, 66 and 76 and openings 54, 64, 57 and 77 provide a channel through which cooling fluid can be pumped in the direction of the arrows B or vice-versa.

Air escape openings 58 are provided in the outer wall 52 of the joint through which air may be allowed to escape when the cooling fluid channel is filled with an aqueous cooling fluid, which openings are closed off by bolts 59 when all air has escaped from the channel.

In Figure 2 the pipe sections 60, 70 and joint 50 are shown in the coupled position where a small gap 80 is left between the ends of the pipe sections 60 and 70 to allow the sections to thermally expand or contract whereby the pipe section 70 will axially slide within the sleeve 50.

The pipe section 70 can be disconnected from the joint by pulling the section 70 out of the sleeve 50 in longitudinal direction relative to the central axis II of the sleeve 50.

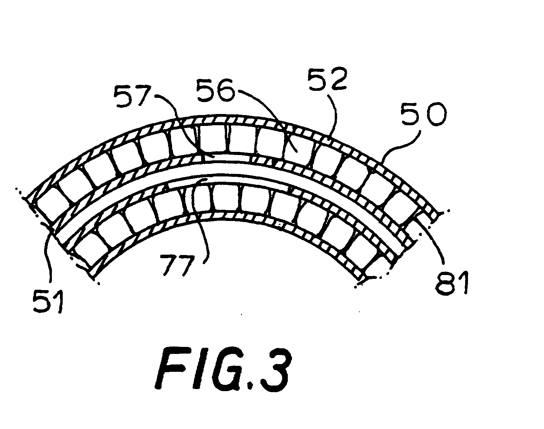

Figure 3 shows that the annular space 56 formed between the inner and outer walls 51 and 52 of the sleeve 50 shown in Figure 2 is filled with a permeable but structural core 81 of rectangular tubular elements or strut elements as described in European patent No. 0281689, which core serves to enhance the strength and stiffness of the inner and outer walls 51 and 52 of the sleeve 50.

It will understood that the sleeve as shown in Figure 2 may be bent or may have three or more branches if it is used to interconnect three or more pipe sections.

It will be also understood that instead of providing the sleeve 50 with a series of circumferentially spaced inlet and outlet openings 54 and 57 as shown in Fig. 2 the sleeve may also be provided with a single inlet opening 54 and a single outlet opening 57. In such case it is preferred that the tubular elements of the core 81 are arranged in such a pattern that they provide a flowguide which evenly distributes cooling fluid throughout the annular space 56. This may be accomplished by arranging the tubular elements in a helical pattern within the annular space 56 such that cooling fluid is induced to swirl through said space 56.

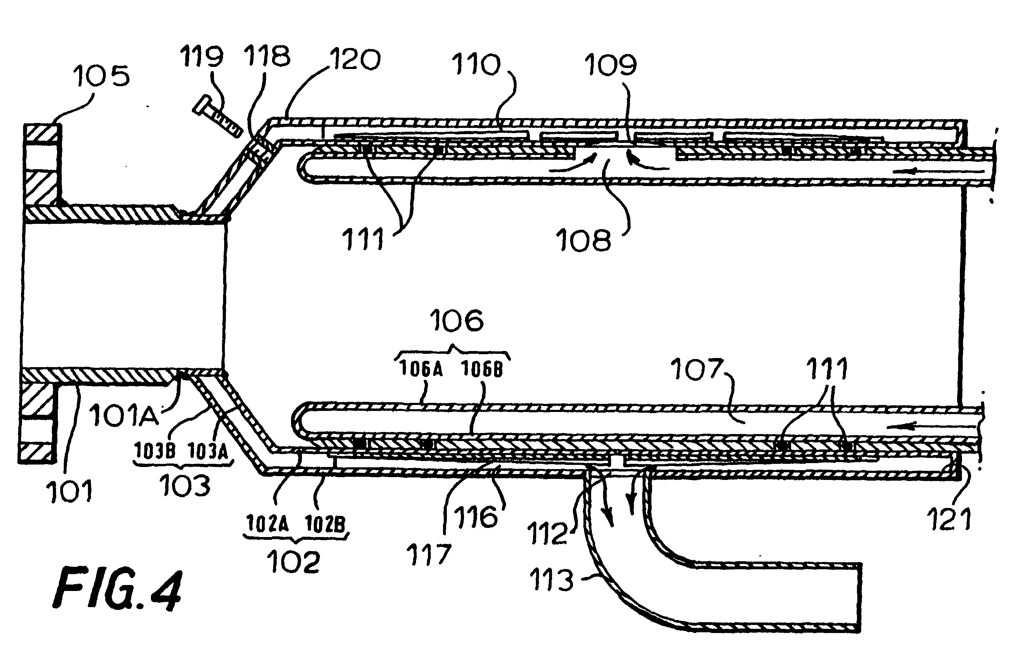

The transition joint shown in Fig. 4 comprises a first tubular section 101 and a second tubular section 102, which forms a sleeve having co-axial inner and outer walls 102A and 102B, respectively. A ring-shaped transition section 103 having co-axial frusto-conical inner and outer walls 103A and 103B, respectively interconnects the first and second section 101 and 102 of the joint. The walls 103A and 103B of the transition section 103 and the walls 102A and 102B of the sleeve 102 are made of a stainless steel and welded together. These walls 102A, 102B, 103A and 103B are coolable by means of the annular space between them which provides a cooling fluid channel. Also the end part 101A of the first tubular section 101 is made of a stainless steel. This end part has a smaller thickness than the other parts of this section 101 that are made of a mild steel.

The metallic tubular section 101 is equipped with a flange 105 for connecting the joint to a conventional steel pipe (not shown).

The second tubular section 102 surrounds an end of a double-walled plastic pipe 106 of which the inner and outer walls 106A and 106B are spaced apart, thereby creating an annular cooling fluid channel 107 between these walls.

The outer wall 106B of the plastic pipe 106 and the inner wall 102A of the second tubular section 102 comprise openings 108 and 109, respectively, which provide a fluid communication between the annular cooling fluid channel 107 of the pipe and an annular cooling fluid channel 110 formed between the inner and outer walls 102A and 102B of the sleeve.

Sealing rings 111 are arranged between the outer wall 106B of the plastic pipe 106 and the inner wall 102A of the second tubular section 102 at each side of the openings 108 and 109 in order to seal off the cooling fluid channels 107 and 110 from the pipe interior and exterior. The inner surface of the inner wall 102A of the section 102 and the inner surface of the tubular section 101 are provided with a nylon coating (not shown) which serves as a fire and corrosion protection of said wall 102A and the sealing rings 111.

The outer wall 102B of the sleeve is provided with an opening 112 which forms, together with a conduit 113 that is secured to the rims of the opening 112, a cooling fluid passage.

As illustrated by the arrows in the example shown cooling fluid flows from the annular cooling fluid channel 107 of the pipe 106 via openings 108 and 109 into the cooling fluid channel 110 of the second tubular section 102 and is then discharged via the opening 112 in the outer wall 102B of said section 102 into the conduit 113.

It will be understood that at another end of a string of double-walled plastic pipes 106 a similar transition joint may be present which comprises a conduit similar to conduit 113 via which cooling fluid is supplied to the annular cooling fluid channels of the plastic pipe string and the sleeve of the latter transition joint.

A flow distribution system 116 comprising a series of tapered flow guide fences 117 is arranged within the annular cooling fluid channel 110 of the section 102. The flow guide fences 117 are perforated in the area of the opening 109 in the inner wall 102A of the section 102 to allow cooling fluid to flow from said opening 109 into the annular fluid channel 110. The system 116 serves to induce cooling fluid that enters the annular fluid channel 110 via the opening 109 to be evenly circulated around the annular fluid channel and also between the inner and outer walls 103A and 103B of the frusto-conical section 103 before it is discharged into the conduit 113. In this way the entire surface of the walls 102A, 102B and 103A, 103B of the sections 102 and 103 is evenly cooled by the cooling fluid.

An air bleeding opening 118 is arranged in the transition section 103 of the joint for bleeding air from the pipe interior. During normal operation of the joint this discharge opening 118 is sealed off by a bleeder plug 119. The outer wall 102B also comprises an air bleeding opening 120 which during normal operation of the joint is sealed off by a bleeder plug (not shown).

An end ring 121 seals off the end of the annular cooling fluid channel 110 of the sleeve, which ring is welded to both the inner and outer wall 102A and 102B of the section 102.

In the embodiment shown the conduit 113 is arranged at the lower side of the section 102 whereas the cooling fluid inlet opening 109 is arranged at the upper side of the section 102. This arrangement ensures a uniform flow of cooling fluid throughout the annular channel 110 of the annular space 110 if the space is initially filled with gas and subsequently a liquid cooling fluid, such as water, is pumped into the annular channel 110.

The space between the inner and outer wall 103A and 103B of the conical transition section 103 is in fluid communication with the annular cooling fluid channel 110 of the sleeve. In this way it is accomplished that the cooling fluid also cools the walls 103A and 103B of the transition section 103 so that also the, transition section 103 acts as a heat buffer which prevents radiation and conduction of heat from the first section 101 towards the other parts of the joint and the plastic pipe 106 if the first section 101 and adjacent steel pipe (not shown) are engulfed in a fire.

The outside walls 101, 101A, 102B, 103B, 113 and 121 are all provided with a glass reinforced plastic or similar water resistant coating (not shown) to prevent direct impingement of the fire onto the surface of the transition joint and to provide a measure of thermal insulation.

## Claims

1. An arrangement comprising a joint (1, 50, 101, 102, 103) which connects a coolable pipe section (2, 60, 106) with co-axial fibre reinforced plastic inner and outer walls (21, 22, 61, 62, 106A-B) and a cooling fluid channel (20, 60, 107) formed between said walls to another pipe section (3, 70), the joint comprising a tubular section having co-axial inner and outer walls (1A, 1B, 51, 52, 102A-B) and a cooling fluid channel (18, 56, 110) formed between said walls, which channel is connectable in fluid communication with said cooling fluid channel of said coolable pipe section characterized in that when in use said cooling fluid channel (18, 56, 110) is separated from both the interior and the exterior of the pipe sections interconnected thereby by sealing rings (17, 65, 75, 111) so that the joint allows the interconnected pipe sections to slide relative to each other and that the cooling fluid channel (18, 56, 110) between the walls of the joint is provided with cooling fluid flow distribution means (18, 19, 54, 57, 81, 117) which evenly distribute the flow of cooling fluid throughout said channel to maintain a uniformly distributed flow path of cooling liquid throughout a substantial part of the cooling fluid channels of the coolable pipe section (2, 60, 106) and of said tubular section of the joint irrespective of said sliding motion.

2. The arrangement according to claim 1 wherein the joint (50) is designed to interconnect a pair of said coolable pipe (60, 70) sections and the cooling fluid channel (56) formed between the walls (51, 52) of said tubular section of the joint has an annular shape and is at least partly filled with a structural but permeable core (81) which core forms part of said cooling fluid distribution means (54, 57, 81).

3. The arrangement according to claim 2 wherein the tubular section is formed by a sleeve (50) having a cylindrical inner surface (51) which fits co-axially around the ends of the pipe sections (60, 70) that are to be interconnected by the joint, which sleeve is provided at each end with a solid end ring (53) to which the inner and outer walls (51, 52) of the sleeve are connected, an inlet section of the cooling fluid channel (56) of the sleeve is provided by one or more inlet openings (54) in the inner wall of the sleeve adjacent to one end ring (53) and an outlet section of said cooling fluid channel of the sleeve is provided by one or more outlet openings (57) in the inner wall of the sleeve adjacent to the other end ring (53).

4. The arrangement according to claim 2 wherein the tubular section consists of a male and a female part (1A, 1B), each part being connected to one of the pipe sections (2, 3) to be interconnected such that the part forms an end piece of the pipe section, the male part (1A) having an inner wall (11) comprising a cylindrical end section (15) which protrudes beyond the outer wall (12) of said part and which has an outer diameter that is substantially equal to the inner diameter of at least the end section of the inner wall (14) of the female part; and the female part having an outer wall comprising a cylindrical end section (16) which protrudes beyond the inner wall (14) of said part and which has an inner diameter that is substantially equal to the outer diameter of at least the end section of the outer wall (12) of the male part (1A).

5. A pipe section (2) adapted to be coupled to other pipe sections by the joint as defined in claim 4, the pipe section being provided at one end with a female part (1B) and at the other end with a male part (1A) of the joint as defined in claim 4.

6. The arrangement according to claim 1 wherein the joint is a transition joint for interconnecting said coolable pipe (106) to a metallic pipe, the joint comprising a first tubular section (101) which is securable in fluid communication with the metallic pipe and which is secured by a ring-shaped transition section (103) in fluid communication with a second tubular section (102), which section is fittable co-axially relative to the coolable pipe and which section is formed by a double-walled sleeve (102A-B) having an annular cooling fluid channel (110) formed between the walls and having one tubular wall (102A) which faces in use a wall (106B) of the plastic pipe and in which one or more perforations (109) are present that are connectable in fluid communication with one or more perforations (108) in said wall (106B) of the plastic pipe in order to create in use a fluid communication between the annular cooling fluid channel (110) formed between the walls of the sleeve and an annular cooling fluid channel (107) formed between the walls of the plastic pipe, the sleeve further being provided with a cooling fluid passage (113) for passing cooling fluid through the annular fluid channels.

7. The arrangement according to claim 6, wherein the second tubular section (102) has a larger width than the first tubular section (101) and the ring-shaped transition section (103) is formed by a double-walled frusto-conical pipe-section (103A-B) of which the inner and outer wall are each at one end thereof secured to the outer circumference of the first tubular section (101) and at the other end thereof to the inner and outer walls (102A-B), respectively, of the sleeve.

8. The arrangement according to claim 6 or 7, wherein the first tubular section (101) is made of a mild steel and the transition section (103) and the sleeve (102) are made of a stainless steel.

9. The arrangement according to claim 6, 7 or 8, wherein the second tubular section (102) is fittable around a coolable double-walled plastic pipe (106) and said perforations (108) are provided through the inner wall (102A) of the sleeve, which inner wall is equipped at its inner circumference with one or more sealing rings (111) at each side of said perforation or perforations (108).

10. The arrangement according to claim 9, wherein the outer wall (102B) of the sleeve is provided with a cooling fluid passage in the form of a cooling fluid conduit (113) which debouches into the annular cooling fluid channel (110) formed between the walls of the sleeve.

11. The arrangement according to claim 10, wherein the perforation or perforations (109) in the inner wall (102A) of the sleeve and the cooling fluid conduit (113) are located substantially at opposite sides of a central axis of the sleeve.

12. The arrangement according to any one of claims 6-11, wherein the first tubular section (101) is provided with a flange (105) for securing the joint to the metallic pipe.

## Patentansprüche

1. Anordnung mit einer Verbindung (1, 50, 101 ,102, 103), welche ein kühlbares Rohrteilstück (2, 60, 106) mit koaxialen faserverstärkten Kunststoffinnen- und -außenwänden (21, 22, 61, 62, 106A-B) und einem zwischen diesen Wänden ausgebildeten Kühlfluidkanal (20, 60, 107) an ein anderes Rohrteilstück (3, 70) anschließt, wobei die Verbindung einen rohrförmigen Abschnitt mit koaxialen Innen- und Außenwänden (1A, 1B, 51, 52, 102A-B) und einem zwischen den genannten Wänden ausgebildeten Kühlfluidkanal (18, 56, 110) aufweist, welcher Kanal in Fluidverbindung mit dem Kühlfluidkanal des kühlbaren Rohrteilstückes verbindbar ist, dadurch gekennzeichnet, daß im Gebrauch der Kühlfluidkanal (18, 56, 110) sowohl vom Inneren als auch vom Äußeren der dadurch untereinander verbundenen Rohrteilstücke durch Dichtringe (17, 65, 75, 111) abgetrennt ist, sodaß die Verbindung den untereinander verbundenen Rohrteilstücken ermöglicht, relativ zueinander zu gleiten, und daß der Kühlfluidkanal (18, 56, 110) zwischen den Wänden der Verbindung mit Kühlfluidströmungsverteilungsmitteln (18, 19, 54, 57, 81, 117) ausgestattet ist, welche die Kühlfluidströmung durch den Kanal gleichmäßig verteilen, um einen gleichförmig verteilten Strömungspfad von Kühlflüssigkeit durch einen wesentlichen Teil der Kühlfluidkanäle des kühlbaren Rohrteilstückes (2, 60, 106) und des genannten rohrförmigen Abschnittes der Verbindung aufrechtzuerhalten, unabhängig von der genannten Gleitbewegung.

2. Anordnung nach Anspruch 1, bei welcher die Verbindung (50) zum Untereinanderverbinden zweier kühlbarer Rohrteilstücke (60, 70) ausgelegt ist und der Kühlfluidkanal (56), der zwischen den Wänden (51, 52) des rohrförmigen Abschnittes der Verbindung ausgebildet ist, eine ringförmige Gestalt hat und zumindest teilweise mit einem strukturellen, jedoch durchlässigen Kern (81) gefüllt ist, welcher Kern einen Teil der Kühlfluidverteilungsmittel (54, 57, 81) bildet.

3. Anordnung nach Anspruch 2, bei welcher der rohrförmige Abschnitt durch eine Hülse (50) mit einer zylindrischen Innenoberfläche (51) gebildet ist, welche koaxial um die Enden der durch die Verbindung untereinander zu verbindenden Rohrteilstücke (60, 70) paßt, welche Hülse an jedem Ende mit einem festen Endring (53) versehen ist, an den die Innen- und Außenwände (51, 52) der Hülse angeschlossen sind, wobei ein Einlaßabschnitt des Kühlfluidkanales (56) der Hülse mit einer oder mehreren Einlaßöffnungen (54) in der Innenwand der Hülse neben einem Endring (53) und ein Auslaßabschnitt des Kühlfluidkanales der Hülse mit einer oder mehreren Auslaßöffnungen (57) in der Innenwand der Hülse neben dem anderen Endring (53) ausgestattet ist.

4. Anordnung nach Anspruch 2, bei welcher der rohrförmige Abschnitt aus einem männlichen und einem weiblichen Teil (1A, 1B) besteht, wobei jeder Teil an eines der untereinander zu verbindenden Rohrteilstücke (2, 3) so angeschlossen ist, daß der Teil ein Endstück des Rohrteilstückes bildet, wobei der männliche Teil (1A) eine Innenwand (11) mit einem zylindrischen Endabschnitt (15) hat, welcher über die Außenwand (12) des genannten Teiles vorsteht und einem Außendurchmesser hat, der im wesentlichen gleich dem Innendurchmesser von zumindest dem Endabschnitt der Innenwand (14) des weiblichen Teiles ist; und der weibliche Teil eine Außenwand mit einem zylindrischen Endabschnitt (16) hat, welcher über die Innenwand (14) des genannten Teiles vorsteht und einen Innendurchmesser hat, der im wesentlichen gleich dem Außendurchmesser von zumindest dem Endabschnitt der Außenwand (12) des männlichen Teiles (1A) ist.

5. Rohrteilstück (2), das dazu ausgebildet ist, an weitere Rohrteilstücke über die Verbindung nach Anspruch 4 gekuppelt zu werden, wobei das Rohrteilstück an einem Ende mit einem weiblichen Teil (1B) und am anderen Ende mit einem männlichen Teil (1A) der Verbindung nach Anspruch 4 ausgestattet ist.

6. Anordnung nach Anspruch 1, bei welcher die Verbindung eine Übergangsverbindung zum Anschließen des kühlbaren Rohres (106) an ein Metallrohr ist, wobei die Verbindung einen ersten rohrförmigen Abschnitt (101) aufweist, der in Fluidverbindung an dem Metallrohr befestigbar ist und welcher über einen ringförmigen Übergangsabschnitt (103) in Fluidverbindung an einem zweiten rohrförmigen Abschnitt (102) befestigt ist, welcher Abschnitt koaxial relativ zu dem kühlbaren Rohr ansetzbar ist und welcher Abschnitt durch eine doppelwandige Hülse (102A-B) gebildet ist, die einen zwischen den Wänden ausgebildeten ringförmigen Kühlfluidkanal (110) und eine rohrförmige Wand (102A) aufweist, welche im Betrieb einer Wand (106B) des Kunststoffrohres gegenüberliegt und in der eine oder mehrere Perforationen (109) vorhanden sind, die in Fluidverbindung mit einer oder mehreren Perforationen (108) in der genannten Wand (106B) des Kunststoffrohres verbindbar sind, um im Betrieb eine Fluidverbindung zwischen dem ringförmigen Kühlfluidkanal (110), der zwischen den Wänden der Hülse ausgebildet ist, und einem ringförmigen Kühlfluidkanal (107) herzustellen, der zwischen den Wänden des Kunststoffrohres ausgebildet ist, wobei die Hülse ferner mit einem Kühlfluiddurchlaß (113) zum Durchleiten von Kühlfluid durch die ringförmigen Fluidkanäle ausgestattet ist.

7. Anordnung nach Anspruch 6, bei welcher der zweite rohrförmige Abschnitt (102) eine größere Breite als der erste rohrförmige Abschnitt (101) hat und der ringförmige Übergangsabschnitt (103) durch einen doppelwandigen kegelstumpfförmigen Rohrabschnitt (103A-B) gebildet ist, dessen Innen- und Außenwände am jeweils einen Ende am Außenumfang des ersten rohrförmigen Abschnittes (101) und an ihrem anderen Ende an den Innen- und Außenwänden (102A-B) der Hülse befestigt sind.

8. Anordnung nach Anspruch 6 oder 7, bei welcher der erste rohrförmige Abschnitt (101) aus Weichstahl und der Übergangsabschnitt (103) und die Hülse (102) aus rostfreiem Stahl gefertigt sind.

9. Anordnung nach Anspruch 6, 7 oder 8, bei welcher der zweite rohrförmige Abschnitt (102) um ein kühlbares doppelwandiges Kunststoffrohr (106) anpaßbar ist und die Perforationen (108) durch die Innenwand (102A) und der Hülse vorgesehen sind, welche Innenwand an ihrem Innenumfang mit einem oder mehreren Dichtringen (111) auf jeder Seite der Perforation oder Perforationen (108) ausgestattet ist.

10. Anordnung nach Anspruch 9, bei welcher die Außenwand (102B) der Hülse mit einem Kühlfluiddurchlaß in Form einer Kühlfluidleitung (113) versehen ist, welche in den ringförmigen Kühlfluidkanal (110) ausmündet, der zwischen den Wänden der Hülse ausgebildet ist.

11. Anordnung nach Anspruch 10, bei welcher die Perforation oder die Perforationen (109) in der Innenwand (102A) der Hülse und die Kühlfluidleitung (113) im wesentlichen an gegenüberliegenden Seiten einer zentralen Achse der Hülse angeordnet sind.

12. Anordnung nach einem der Ansprüche 6 bis 11, bei welcher der erste rohrförmige Abschnitt (101) mit einem Flansch (105) zum Befestigen der Verbindung an dem Metallrohr versehen ist.

## Revendications

1. Agencement comprenant un joint (1, 50, 101, 102, 103) qui connecte une section de conduite refroidissable (2, 60, 106) avec des parois intérieure et extérieure en plastique renforcées de fibres coaxiales (21, 22, 61, 62, 106A-B) et un canal de fluide de refroidissement (20, 60, 107) formé entre lesdites parois à une autre section de conduite (3, 70), le joint comprenant une section tubulaire comportant des parois intérieure et extérieure coaxiales (1A, 1B, 51, 52, 102A-B) et un canal de fluide de refroidissement (18, 56, 110) formé entre lesdites parois, lequel canal est connectable en communication pour un fluide audit canal de fluide de refroidissement de ladite section de conduite refroidissable, caractérisé en ce qu'en cours d'utilisation ledit canal de fluide de refroidissement (18, 56, 110) est séparé à la fois de l'intérieur et de l'extérieur des sections de conduite raccordées ainsi par des anneaux de scellage (17, 65, 75, 111), de telle sorte que le joint permette aux sections de conduite raccordées de coulisser l'une par rapport à l'autre et en ce que le canal de fluide de refroidissement (18, 56, 110) entre les parois du joint est pourvu de moyens de distribution d'écoulement de fluide de refroidissement (18, 19, 54, 57, 81, 117) qui distribuent uniformément l'écoulement de fluide de refroidissement dans ledit canal pour maintenir un parcours d'écoulement distribué de manière uniforme de liquide de refroidissement dans une partie importante des canaux de fluide de refroidissement de la section de conduite refroidissable (2, 60, 106) et de la section tubulaire précitée du joint indépendamment du mouvement de coulissement susdit.

2. Agencement suivant la revendication 1, dans lequel le joint (50) est conçu pour raccordé une paire desdites sections de conduite refroidissables (60, 70) et le canal de fluide de refroidissement (56) formé entre les parois (51, 52) de la section tubulaire précitée du joint a une forme annulaire et est au moins partiellement rempli d'un noyau (81) structural mais perméable, lequel noyau fait partie des moyens de distribution de fluide de refroidissement (54, 57, 81) précités.

3. Agencement suivant la revendication 2, dans lequel la section tubulaire est formée d'un manchon (50) comportant une surface intérieure cylindrique (51) qui s'adapte coaxialement sur les extrémités des sections de conduite (60, 70) qui doivent être raccordées par le joint, lequel manchon est pourvu à chaque extrémité d'un anneau d'extrémité plein (53) auquel les parois intérieure et extérieure (51, 52) du manchon sont raccordées, une section d'entrée du canal de fluide de refroidissement (56) du manchon est constituée par une ou plusieurs ouvertures d'entrée (54) dans la paroi intérieure du manchon adjacente à un anneau d'extrémité (53) et une section de sortie dudit canal de fluide de refroidissement du manchon est constituée par une ou plusieurs ouvertures de sortie (57) dans la paroi intérieure du manchon adjacente à l'autre anneau d'extrémité (53).

4. Agencement suivant la revendication 2, dans lequel la section tubulaire se compose d'une partie mâle et femelle (1A, 1B), chaque partie étant connectée à une des sections de conduite (2, 3) à raccorder de telle sorte que la partie forme une pièce d'extrémité de la section de conduite, la partie mâle (1A) comportant une paroi intérieure (11) comprenant une section d'extrémité cylindrique (15) qui dépasse de la paroi extérieure (12) de ladite partie et qui a un diamètre extérieur qui est sensiblement égal au diamètre intérieur d'au moins la section d'extrémité de la paroi intérieure (14) de la partie femelle, et la partie femelle comportant une paroi extérieure comprenant une section d'extrémité cylindrique (16) qui dépasse de la paroi intérieure (14) de ladite partie et qui a un diamètre intérieur qui est sensiblement égal au diamètre extérieur d'au moins la section d'extrémité de la paroi extérieure (12) de la partie mâle (1A).

5. Section de conduite (2) adaptée pour être accouplée à d'autres sections de conduite par le joint tel que défini à la revendication 4, la section de conduite étant pourvue à une extrémité d'une partie femelle (1B) et à l'autre extrémité d'une partie mâle (1A) du joint tel que défini à la revendication 4.

6. Agencement suivant la revendication 1, dans lequel le joint est un joint de transition pour raccorder la conduite refroidissable (106) précitée à une conduite métallique, le joint comprenant une première section tubulaire (101) qui est fixable en communication pour un fluide à la conduite métallique et qui est fixée par une section de transition en forme d'anneau (103) en communication pour un fluide à une seconde section tubulaire (102), laquelle section est adaptable coaxialement par rapport à la conduite refroidissable et laquelle section est formée par un manchon à double paroi (102A-B) comportant un canal de fluide de refroidissement annulaire (110) formé entre les parois et comportant une paroi tubulaire (102A) qui fait face en cours d'utilisation à une paroi (106B) de la conduite en plastique et dans laquelle une ou plusieurs perforations (109) sont présentes qui sont connectables en communication pour un fluide avec une ou plusieurs perforations (108) dans ladite paroi (106B) de la conduite en plastique afin de créer en cours d'utilisation une communication pour un fluide entre le canal de fluide de refroidissement annulaire (110) formé entre les parois du manchon et un canal de fluide de refroidissement annulaire (107) formé entre les parois de la conduite en plastique, le manchon étant de plus pourvu d'un passage de fluide de refroidissement (113) pour faire passer le fluide de refroidissement dans les canaux de fluide annulaires.

7. Agencement suivant la revendication 6, dans lequel la seconde section tubulaire (102) a une largeur plus grande que la première section tubulaire (101) et la section de transition en forme d'anneau (103) est formée par une section de conduite tronconique à double paroi (103A-B) dont les parois intérieure et extérieure sont chacune à une extrémité fixées à la circonférence extérieure de la première section tubulaire (101 ) et à l'autre extrémité respectivement aux parois intérieure et extérieure (102A-B) du manchon.

8. Agencement suivant l'une ou l'autre des revendications 6 et 7, dans lequel la première section tubulaire (101) est faite d'un acier doux et la section de transition (103) et le manchon (102) sont faits d'un acier inoxydable.

9. Agencement suivant l'une quelconque des revendications 6, 7 et 8, dans lequel la seconde section tubulaire (102) est adaptable sur une conduite en plastique à double paroi refroidissable (106) et lesdites perforations (108) sont formées à travers la paroi intérieure (102A) du manchon, laquelle paroi intérieure est pourvue à sa circonférence intérieure d'un ou plusieurs anneaux de scellage (111) de chaque côté de la perforation ou des perforations (108) précitées.

10. Agencement suivant la revendication 9, dans lequel la paroi extérieure (102B) du manchon; est pourvue d'un passage de fluide de refroidissement sous la forme d'un conduit de fluide de refroidissement (113) qui débouche dans le canal de fluide de refroidissement annulaire (110) formé entre les parois du manchon.

11. Agencement suivant la revendication 10, dans lequel la perforation ou les perforations (109) dans la paroi intérieure (102A) du manchon et la conduite de fluide de refroidissement (113) sont agencées sensiblement à des côtés opposés d'un axe central du manchon.

12. Agencement suivant l'une quelconque des revendications 6 à 11, dans lequel la première section tubulaire (101) est pourvue d'une bride (105) pour fixer le joint à la conduite métallique.
